# FASCICULE DE BREVET EUROPEEN

(11) **EP 0 569 271 B1**
(45) Date de publication et mention de la délivrance du brevet: **17.07.1996**
(21) Numéro de dépôt: 93401110.7
(22) Date de dépôt: 28.04.1993
(51) Int. Cl.: F16F 13/00

(54) **Support hydroélastique, notamment pour la suspension d'un moteur de véhicule automobile**
Hydroelastisches Lager, insbesondere zur Lagerung eines Kraftfahrzeugmotors
Hydro-elastic support, in particular for the suspension of an automotive vehicle engine

(30) Priorité: 07.05.1992 FR 9205655
(43) Date de publication de la demande: 10.11.1993
(73) Titulaire: AUTOMOBILES PEUGEOT, F-75116 Paris (FR); AUTOMOBILES CITROEN, F-92200 Neuilly sur Seine (FR)
(72) Inventeur: Le Fol, Marcel, F-35410 Domloup (FR); Robic, Pascal, F-35000 Rennes (FR)
(74) Mandataire: Polus, Camille

(56) Documents cités:
- DE-A- 2 737 985
- FR-A- 2 507 976
- FR-A- 2 670 261
- F.D.JONES (ED.) 'INGENIOUS MECHANISMS FOR DESIGNERS AND INVENTORS' 1930 , THE INDUSTRIAL PRESS , NEW YORK, U.S.A.

## Description

La présente invention concerne un support hydroélastique destiné à être interposé entre deux ensembles à suspendre l'un par rapport à l'autre.

L'invention concerne notamment un support pour la suspension d'un moteur dans un véhicule automobile.

Le document FR-A-2.364.373 décrit et représente un support hydroélastique du type comprenant deux armatures reliées respectivement aux deux ensembles à suspendre, ces deux armatures étant réunies par une masse de matériau élastomère, le support comportant au moins une chambre de travail et une chambre d'expansion, ces deux chambres étant remplies au moins partiellement de liquide et reliées entre elles par un passage de communication, et du type dans lequel la chambre de travail est délimitée en partie par une cloison mobile en matériau élastique dont la face extérieure comporte un poussoir avec lequel coopère une came d'un dispositif d'entraînement de la cloison mobile pour appliquer à cette dernière des déplacements commandés de manière à créer dans la chambre de travail des forces de pression synchrones avec les harmoniques des vibrations de l'un des deux ensembles à isoler tels que par exemple une machine tournante ou un moteur à combustion interne. Les déplacements auxquels est soumis le poussoir sont par exemple des déplacements alterntifs de fréquence et de phase égales à celles du défaut d'équilibrage à filtrer.

L'agencement décrit et représenté dans ce document est de conception particulièrement complexe, ce document ne proposant par ailleurs aucune solution industrialisable permettant de monter de manière simple un tel type dre support hydroélastique entre la caisse d'un véhicule automobile et le groupe motopropulseur tout en assurant l'entraînement en rotation de la came d'excitation de la cloison mobile.

Afin de remédier à ces inconvénients, il a déjà été proposé dans la demande de brevet français FR-A-2 670 261, publié après la date de priorité de la présente demande, de prévoir que l'axe d'entraînement en rotation de la came est monté tournant dans un palier fixé à l'une des deux armatures du support hydroélastique. Cette solution n'est pas entièrement satisfaisante dans la mesure où les organes qui appliquent à la cloison mobile un mouvement alternatif sont susceptibles de se séparer l'un de l'autre et de provoquer de ce fait un retard entre le signal d'entrée et l'action correctrice sur le support hydroélastique.

Il est par ailleurs connu du document FR-A-2.507.976 d'assurer l'actionnement d'un support élastique par une bielle qui est reliée au groupe motopropulseur du véhicule par un excentrique. Dans ce document, l'excentrique est disposé sur l'extrémité du vilebrequin du groupe motopropulseur et il agit sur une bielle verticale qui est reliée au groupe motopropulseur, c'est-à-dire que ce dernier est pendu sous le support hydroélastique.

Outre le fait que la bielle de transmission est longue et donc de masse importante, on constate que cet agencement a également pour inconvénient de ne pas pouvoir dissocier la fonction porteuse du support et sa fonction de clapet de filtrage. Enfin, cet agencement a pour inconvénient d'appliquer en permanence à l'excentrique la masse du groupe motopropulseur et de nécessiter de réaliser un clapet très rigide. Cet inconvénient était aussi inhérent à la structure du support hydroélastique illustré dans la demande de brevet français n° 90 15439 dans laquelle la cloison mobile doit être suffisamment rigide pour lui conférer une fonction de ressort de rappel pour maintenir le galet en contact avec la came.

Afin de remédier à ces inconvénients, l'invention propose un support hydroélastique du type mentionné précédemment, caractérisé en ce que le dispositif d'entraînement de la cloison mobile est du type à bielle et manivelle dans lequel le pied de la bielle est relié au poussoir et dans lequel l'arbre d'entraînement en rotation de la manivelle est monté tournant dans un palier fixé à l'une des deux armatures du support hydroélastique.

Selon d'autres caractéristiques de l'invention :
- la manivelle comporte un maneton excentré monté à rotation dans la tête de la bielle ;
- le poussoir peut être fixé à l'extrémité libre du pied de bielle ou réalisé venu de matière avec ce dernier ;
- la tête de la bielle est réalisée en deux parties ;
- la bielle est réalisée en une seule pièce par moulage ;
- une extrémité de l'arbre d'entraînement en rotation de la manivelle comporte des moyens de détrompage permettant de déterminer sa position angulaire en vue du raccordement de l'arbre d'entraîne-ment ;
- l'armature est une armature de forme générale cylindrique dont une première extrémité axiale est reliée à la masse de matériau élastomère et dont la seconde extrémité axiale reçoit un couvercle de fermeture dans lequel est agencé le palier de l'arbre d'entraînement de la manivelle ;
- la seconde extrémité axiale de l'armature cylindrique comporte une bride de fixation du support sur ledit ensemble, le couvercle comportant une bride radiale agencée en vis-à-vis de la bride de l'armature contre laquelle elle est serrée axialement ;
- la chambre d'expansion est de forme générale annulaire et délimite un logement intérieur dans lequel est agencé le poussoir ;
- la cloison mobile présente sensiblement la forme d'un disque relié à l'armature par son bord périphérique extérieur ;
- le bord périphérique de la cloison mobile est monté serré de manière étanche entre les bords circulaires intérieurs en vis-à-vis de deux plaques annulaires rigides ;
- la plaque annulaire disposée axialement du côté de la masse en matériau élastomère comporte une partie qui présente en section un profil de révolution qui s'étend depuis son bord circulaire intérieur vers l'intérieur de la chambre de travail et qui comporte au moins un orifice calibré de passage du liquide ;
- la partie de révolution comporte un orifice central calibré.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale selon le ligne 1-1 de la figure 2 d'un support hydroélastique réalisé conformément aux enseignements de l'invention ;
- la figure 2 est une vue en section axiale selon la ligne 2-2 de la figure 1 ;
- la figure 3 est un schéma équivalent permettant d'illustrer le mode de fonctionnement du support représenté aux figures 1 et 2 ; et
- la figure 4 est une vue en section axiale similaire à celle de la figure 2 illustrant une variante de réalisation du support hydroélastique.

Le support 10 illustré aux figures est constitué d'une première armature de forme générale cylindrique 12 et d'une seconde armature 14 qui sont reliées entre elles par une masse en matériau élastomère 16.

L'armature 12 est prévue pour être reliée à une partie non représentée du groupe motopropulseur d'un véhicule automobile, tandis que la seconde armature 14 est prévue pour être reliée à une partie de la structure du véhicule par une liaison filetée 18.

La première armature 12 présente une forme générale cylindrique d'axe X-X.

La première extrémité axiale 20 de l'armature 12 est noyée dans le matériau élastomère de la masse 16.

La seconde extrémité axiale opposée 22 de l'armature 12 est une bride qui s'étend dans un plan radial perpendiculaire à l'axe X-X et qui permet la fixation de l'armature 12 à une portion d'un groupe motopropulseur.

La masse en matériau élastomère 16 délimite en partie une chambre de travail 26, à sa partie inférieure en considérant les figures.

La chambre 26 est également délimitée par une plaque intermédiaire rigide 28 de forme générale annulaire et par une cloison mobile déformable élastiquement 30 qui est susceptible de se déplacer sensiblement selon la direction X-X.

La plaque 28 coopère avec une plaque symétrique 32 pour délimiter entre elles un canal de passage 34 qui, selon une technique connue, met en communication la chambre de travail 26 avec une chambre d'expansion 33.

Le bord périphérique 36 de la cloison mobile 30 en forme de disque est réalisé sous la forme d'un bourrelet qui est monté serré de manière étanche entre les bords circulaires intérieurs en vis-à-vis des deux plaques annulaires rigides 28 et 32.

Les chambres 26 et 33 sont remplies de liquide.

La chambre d'expansion 33 est délimitée d'une part par la face supérieure de la plaque annulaire 32 et d'autre part par une portion de membrane déformable élastiquement 38 réalisée venue de matière avec la cloison mobile 30.

A cet effet, la membrane déformable élastiquement 38 comporte une portion cylindrique de liaison 40 qui prolonge axialement la cloison mobile 30, le bourrelet 36 étant formé sur la paroi cylindrique extérieure de la portion de liaison.

La face supérieure 42 de la cloison mobile située à l'extérieur de la chambre de travail 26 comporte un poussoir d'actionnement 44 qui permet d'appliquer à la cloison mobile 30 des efforts selon la direction X-X.

Le poussoir 44 comporte une plaque 46 qui s'étend selon un plan sensiblement perpendiculaire à l'axe X-X et qui est adhérisée à la face supérieure 42 de la cloison mobile 30.

Le poussoir 44 comporte un prolongement axial 48 qui est relié à une bielle d'actionnement 50 qui fait partie d'un dispositif d'actionnement du type à bielle et manivelle qui sera maintenant décrit en détail.

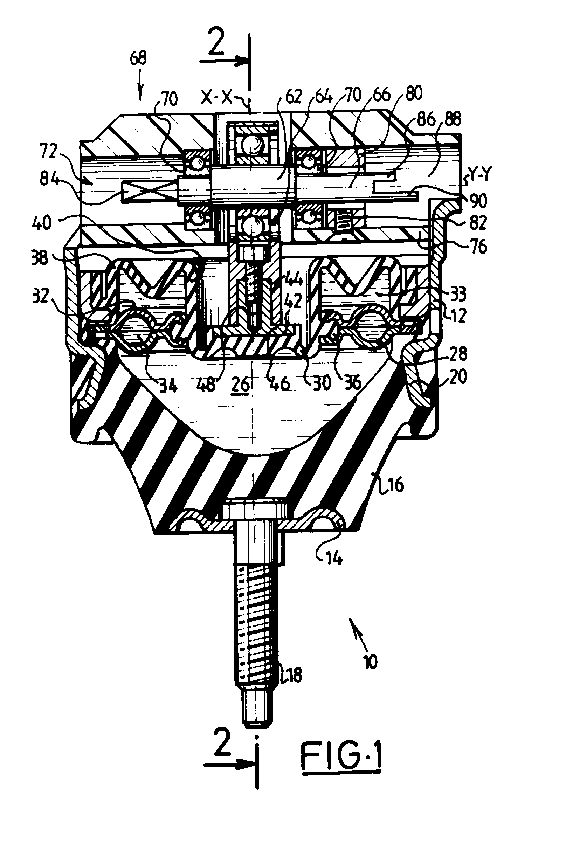

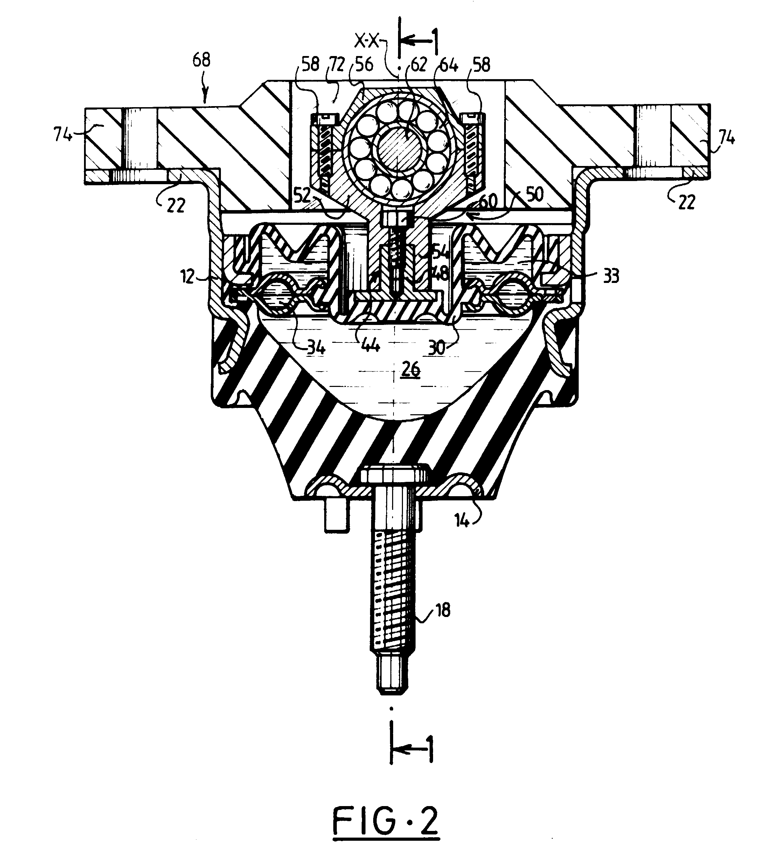

Dans le mode de réalisation illustré aux figures 1 et 2, la tête de la bielle 50 est réalisée en deux parties.

Une première partie 52 prolonge le pied de bielle 54 et elle est complétée par un chapeau de bielle 56 qui lui est fixé par des vis 58.

La portion cylindrique 48 du poussoir 44 est fixée à l'extrémité libre du pied 54 de la bielle 50 au moyen d'une vis 60 dont la tête est accessible depuis la face semi-cylindrique interne de la première partie 52 de la tête de la bielle 50.

La tête de la bielle 50 est montée serrée sur un roulement 64, à billes ou à aiguilles dans lequel est reçu à rotation un maneton excentré 62.

Le maneton 62 est réalisé venu de matière avec son arbre d'entraînement 66 de manière à constituer une manivelle dont l'axe de rotation Y-Y est sensiblement perpendiculaire à l'axe X-X du support hydroélastique 10.

A cet effet, l'arbre d'entraînement 66 comporte deux portées cylindriques qui sont montées à rotation dans un couvercle 68 par l'intermédiaire de deux roulements à billes 70.

Le couvercle 68 est par exemple un pièce en matière plastique moulée comportant un logement central 72 qui reçoit la manivelle et la tête de la bielle 50 et qui comporte deux ailes latérales 74 permettant d'en assurer la fixation sur la bride radiale 22 de la première armature cylindrique 12.

La pièce 68 comporte une face inférieure 76 de contour circulaire de manière à constituer un couvercle de fermeture de l'armature cylindrique 12.

Dans le mode de réalisation illustré aux figures 1 et 2, l'assemblage du système à bielle et manivelle s'effectue de la manière suivante.

Le corps de la bielle 50 est fixé sur le poussoir 44 au moyen de la vis 60.

Par ailleurs, la pièce 68 formant couvercle est équipée de son premier roulement de palier 70 dans lequel est introduite la portion cylindrique correspondante de l'arbre d'entraînement 66 qui est introduit axialement selon la direction Y-Y, depuis la droite en considérant la figure 1, dans le logement 72 et à travers la bague intérieure du roulement 64.

Le second roulement de palier 70 est ensuite mis en place et maintenu axialement par une bague d'appui 80 qui est immobilisée axialement par une vis 82.

L'ensemble de la pièce 68 ainsi équipée est ensuite mis en place sur la bride 22 sur laquelle elle peut être serrée axialement par exemple par des liaisons filetées (non représentées).

Il ne reste plus ensuite qu'à assembler le chapeau de bielle 56 sur la partie 52 de la tête de la bielle 50 au moyen des vis 58.

Comme on peut le constater sur la figure 1, l'arbre d'entraînement 66 comporte une première extrémité axiale 84 en vue de permettre son entraînement en rotation.

L'extrémité axiale opposée 86 comporte des moyens de détrompage réalisés ici sous la forme d'une fente axiale 88 et d'un méplat 90.

Les moyens de détrompage 88, 90 permettent de maintenir l'arbre d'entraînement 66 dans une position angulaire déterminée par rapport à la pièce 68, par exemple au moyen d'une clé de détrompage (non représentée) introduite axialement dans le logement 72 et qui coopère par ailleurs avec des surfaces d'indexation correspondantes de la pièce 68, de manière que, lors du raccordement de l'extrémité d'entraînement 84 avec un organe d'entraînement (non représenté), on assure un positionnement angulaire déterminé de l'arbre d'entraînement 66.

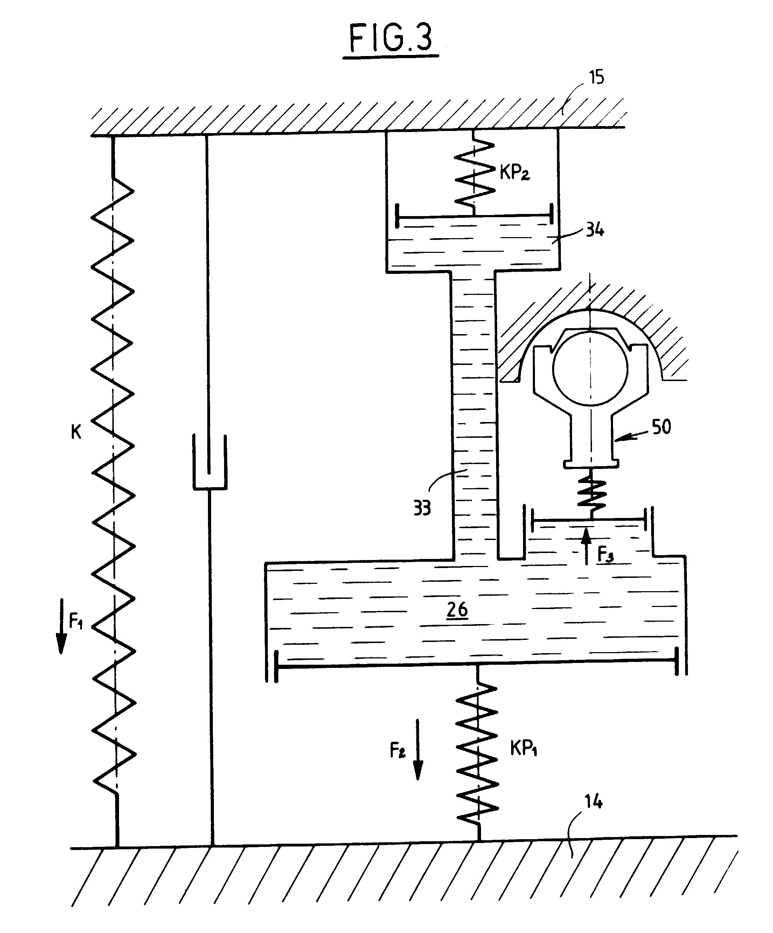

On décrira maintenant le mode de fonctionnement du support hydroélastique représenté aux figures 1 et 2 en se reportant à la figure 3.

Les vibrations du groupe motopropulseur 15 sont transmises à la caisse du véhicule par l'intermédiaire de l'armature 12, de la masse en matériau élastomère 16 et de l'armature 14.

L'effort appliqué au support peut être décomposé en deux efforts distincts.

Premièrement, l'effort F1, également appelé effort direct dont la valeur dépend de la raideur K de la masse en matériau élastomère 16.

Deuxièmement, l'effort F2 qui résulte de l'action du liquide contenu dans la chambre de travail 26 et dont la valeur dépend de la raideur de tenue à la pression KP1.

Le maneton excentré 62 qui est entraîné en rotation de façon synchrone par rapport à la rotation du groupe motopropulseur, et notamment par rapport à la rotation du vilebrequin de ce dernier, transmet, par l'intermédiaire de la bielle 50, un effort F3 parfaitement synchrone et dont la valeur est telle que F3 = F1 + F2. L'action du dispositif à bielle et manivelle a donc pour effet d'annuler tout effort transmis à la structure du véhicule.

La masse en matériau élastomère 16 se comporte comme une pompe et elle est montée comprimée lors de la mise en place du support hydroélastique.

Le dispositif qui vient d'être décrit est conçu pour amortir ou atténuer les vibrations de la caisse du véhicule, ainsi que pour empêcher la transmission des vibrations provenant du moteur afin de procurer un meilleur confort du véhicule.

L'utilisation connue du passage 34 qui relie entre elles les chambres de travail 26 et d'expansion 33 procure un amortissement élevé à la fréquence de hachis.

L'action de l'ensemble à bielle et manivelle permet d'appliquer au support hydroélastique des forces de pression depuis l'extérieur.

Ces forces de pression sont synchrones avec les harmoniques d'ordre 2 des vibrations d'excitation provenant du groupe motopropulseur.

Des forces de pression sont ainsi injectées dans la chambre de travail d'un support hydroélastique du type à amortissement à colonne, par ondes successives.

Comme on l'a mentionné précédemment en référence au schéma de la figure 3, la raideur résultante du support est nulle.

L'arbre d'entraînement 66 de l'excentrique 62, de manière à être entraîné en rotation de façon synchrone avec le groupe motopropulseur, est par exemple relié à une poulie entraînée directement par la courroie de distribution du groupe motopropulseur, ou par tout autre mécanisme permettant d'aboutir au même résultat, tel que par exemple une cascade de pignons.

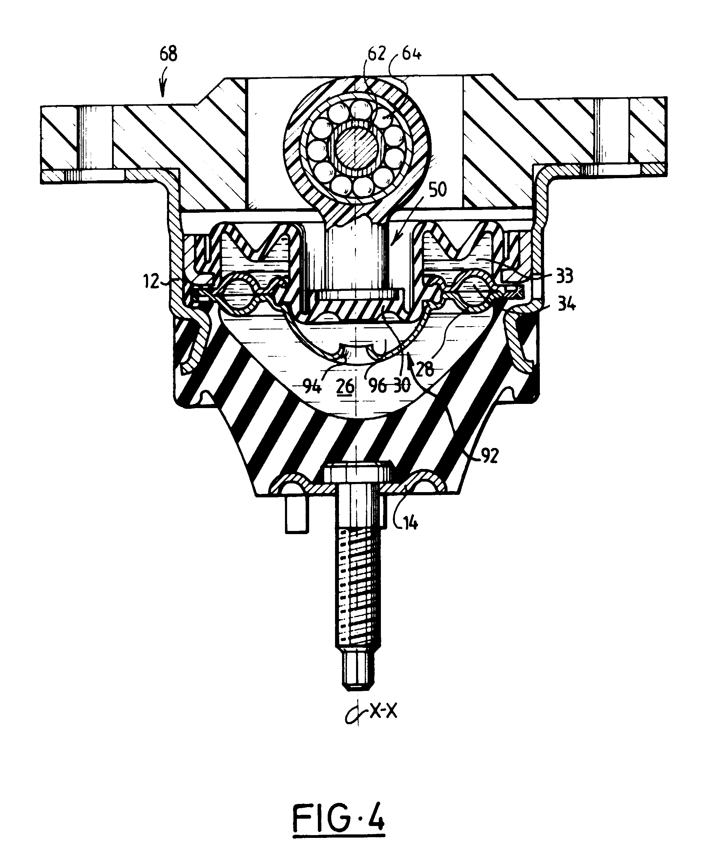

On décrira maintenant la variante de réalisation illustrée à la figure 4.

Selon une première caractéristique de cette variante, la bielle 50 est réalisée en une seule pièce moulée en matière plastique ou en aluminium.

Selon une autre caractéristique de la variante illustrée à la figure 4, la plaque annulaire inférieure 28 comporte une coupelle centrale 92 de profil de révolution autour de l'axe X-X en forme de dôme et qui comporte un trou central calibré 94.

Le trou 94 pourrait être remplacé par une série d'orifices calibrés.

Cette caractéristique permet au support hydroélastique 10 d'agir sur les modes vibratoires intervenant au-delà d'une vitesse de rotation de 5000 tours/minute du moteur. En effet, il devient alors parfois nécessaire de créer localement des surtensions dans une plage vibratoire déterminée.

A cet effet, la section de passage de l'orifice calibré 94 est ajustée de façon à créer la surtension nécessaire, selon le principe général connu des supports à colonne dans lesquels la longueur de la colonne d'amortissement est ajustée en fonction de la résonnance à amortir.

On a ainsi créé un nouveau système d'amortissement comportant une nouvelle chambre 96 délimitée par la coupelle 92 et par la cloison mobile 30.

## Revendications

1. Support hydroélastique (10) destiné à être interposé entre deux ensembles à suspendre l'un par rapport à l'autre, notamment pour la suspension d'un moteur dans un véhicule automobile, du type comportant deux armatures (12, 14) reliées respectivement aux deux ensembles, ces deux armatures étant réunies par une masse en matériau élastomère (16), le support comportant au moins une chambre de travail (26) délimitée au moins en partie par la masse en matériau élastomère (16), et une chambre d'expansion (33), ces deux chambres étant remplies au moins partiellement de liquide et reliées entre elles par un passage de communication (34), et du type dans lequel la chambre de travail (26) est également délimitée en partie par une cloison mobile (30) en matériau élastique dont la face extérieure (42) comporte un poussoir (44) avec lequel coopère un dispositif d'entraînement de la cloison mobile (30) pour appliquer à cette dernière des déplacements commandés de manière à créer dans la chambre de travail (26) des forces de pression synchrones avec les harmoniques des vibrations de l'un desdits deux ensembles, caractérisé en ce que le dispositif d'entraînement est du type à bielle (50) et manivelle (62, 66) dans lequel le pied (54) de la bielle (50) est relié au poussoir (44) et dans lequel l'arbre (66) d'entraînement en rotation de la manivelle (62) est monté tournant dans un palier (70) fixé à l'une (12) des deux armatures.

2. Support hydroélastique selon la revendication 1, caractérisé en ce que la manivelle comporte un maneton (62) excentré monté à rotation dans la tête (52, 56) de la bielle (50).

3. Support hydroélastique selon la revendication 2, caractérisé en ce que le maneton excentré (62) est monté à rotation dans un roulement (64) monté serré sur la tête (52, 56) de la bielle (50).

4. Support hydroélastique selon l'une quelconque des revendications 1 à 3, caractérisé en ce que le poussoir (44) est fixé à l'extrémité libre du pied (54) de la bielle (50).

5. Support hydroélastique selon l'une quelconque des revendications 1 à 3, caractérisé en ce que le poussoir (44) est réalisé venu de matière avec le pied de la bielle (50).

6. Support hydroélastique selon l'une quelconque des revendications 1 à 5, caractérisé en ce que la tête de la bielle (50) est réalisée en deux parties (52, 56).

7. Support hydroélastique selon l'une quelconque des revendications 1 à 5, caractérisé en ce que la bielle (50) est réalisée en une seule pièce par moulage.

8. Support hydroélastique selon l'une quelconque des revendications précédentes, caractérisé en ce qu'une extrémité (86) de l'arbre (66) d'entraînement en rotation de la manivelle (62) comporte des moyens (88, 90) de détrompage permettant de déterminer sa position angulaire en vue du raccordement de l'arbre d'entraînement.

9. Support hydroélastique selon l'une quelconque des revendications précédentes, caractérisé en ce que ladite armature (12) est une armature de forme générale cylindrique dont une première extrémité axiale (20) est reliée à la masse en matériau élastomère (16) et dont la seconde extrémité axiale (22) reçoit un couvercle de fermeture (68) dans lequel est agencé le palier (70) de l'arbre (66) d'entraînement en rotation de la manivelle (62).

10. Support hydroélastique selon la revendication 9, caractérisé en ce que la seconde extrémité axiale (22) de l'armature cylindrique (12) comporte une bride de fixation du support hydroélastique (10) sur ledit ensemble, et en ce que le couvercle (68) comporte une bride radiale (74) agencée en vis-à-vis de la bride (22) de l'armature (12) contre laquelle elle est serrée axialement.

11. Support hydroélastique selon l'une quelconque des revendications précédentes, caractérisé en ce que la chambre d'expansion (33) est de forme générale annulaire et délimite un logement intérieur dans lequel est agencé le poussoir (44).

12. Support hydroélastique selon l'une quelconque des revendications précédentes, caractérisé en ce que la cloison mobile (30) présente sensiblement la forme d'un disque relié à l'armature par son bord périphérique extérieur.

13. Support hydroélastique selon la revendication 12, caractérisé en ce que le bord périphérique (36) de la cloison mobile (30) est monté serré de manière étanche entre les bords circulaires intérieurs en vis-à-vis de deux plaques annulaires rigides (28, 32).

14. Support hydroélastique selon la revendication 13, caractérisé en ce que la plaque annulaire (28) disposée axialement du côté de la masse en matériau élastomère (16) comporte une partie (92) qui présente en section un profil de révolution et qui s'étend depuis son bord circulaire intérieur vers l'intérieur de la chambre de travail (26) et qui comporte au moins un orifice calibré (94) de passage du liquide.

15. Support hydroélastique selon la revendication 14, caractérisé en ce que ladite partie de révolution (92) comporte un orifice central calibré (94).

## Patentansprüche

1. Hydroelastische Halterung (10) zum Einsetzen zwischen zwei Anordnungen, die gegenseitig aufzuhängen sind, insbesondere zum Aufhängen eines Motors in einem Kraftfahrzeug mit zwei Mantelteilen (12, 14), die jeweils mit den beiden Anordnungen verbunden sind, welche beiden Mantelteile durch eine Masse (16) aus einem elastomeren Material zusammengefügt sind, wobei die Halterung wenigstens eine Arbeitskammer (26), die wenigstens teilweise durch die Masse (16) aus einem elastomeren Material begrenzt ist, und eine Ausdehnungskammer (33) aufweist, welche beiden Kammern wenigstens teilweise mit einer Flüssigkeit gefüllt sind und miteinander über einen Verbindungskanal (34) verbunden sind, und wobei die Arbeitskammer (26) teilweise gleichfalls von einer beweglichen Zwischenwand (30) aus einem elastischen Material begrenzt ist, deren Außenfläche (42) einen Stößel (44) aufweist, mit dem eine Einrichtung zum Mitnehmen der beweglichen Zwischenwand (30) zusammenarbeitet, um dieser Versetzungen zu geben, die so gesteuert sind, daß in der Arbeitskammer (26) Druckkräfte erzeugt werden, die mit den Harmonischen der Schwingungen in einer der beiden besagten Anordnungen synchron sind, dadurch gekennzeichnet, daß die Einrichtung zum Mitnehmen vom Typ einer Treibstange (50) und einer Kurbelstange (62, 66) ist, in der der Fuß (54) der Treibstange (50) mit dem Stößel (44) verbunden ist, und in der die Welle (66) zum Mitdrehen der Kurbelstange (62) drehbar in einem Lager (70) angebracht ist, das an einem (12) der beiden Mantelteile befestigt ist.

2. Hydroelastische Halterung nach Anspruch 1, dadurch gekennzeichnet, daß die Kurbelstange einen exzentrischen Kurbelzapfen (62) aufweist, der drehbar im Kopf (52, 56) der Treibstange (50) angebracht ist.

3. Hydroelastische Halterung nach Anspruch 2, dadurch gekennzeichnet, daß der exzentrische Kurbelzapfen (62) drehbar in einem wälzlager (64) angebracht ist, das fest am Kopf (52, 56) der Treibstange (50) angebracht ist.

4. Hydroelastische Halterung nach einem der Ansprüche 1 bis 3, dadurch gekennzeichnet, daß der Stößel (44) am freien Ende des Fußes (54) der Treibstange (50) befestigt ist.

5. Hydroelastische Halterung nach einem der Ansprüche 1 bis 3, dadurch gekennzeichnet, daß der Stößel (44) in einem stück mit dem Fuß der Treibstange (50) ausgebildet ist.

6. Hydroelastische Halterung nach einem der Ansprüche 1 bis 5, dadurch gekennzeichnet, daß der Kopf der Treibstange (50) aus zwei Teilen (52, 56) besteht.

7. Hydroelastische Halterung nach einem der Ansprüche 1 bis 5, dadurch gekennzeichnet, daß die Treibstange (50) aus einem einzigen Gußteil gebildet ist.

8. Hydroelastische Halterung nach einem der vorhergehenden Ansprüche, dadurch gekennzeichnet, daß ein Ende (86) der Welle (66) zum Mitdrehen der Kurbelstange (62) Korrektureinrichtungen (88, 90) aufweist, die es erlauben ihre Winkelposition im Hinblick auf den Anschluß der Mitnahmewelle festzulegen.

9. Hydroelastische Halterung nach einem der vorhergehenden Ansprüche, dadurch gekennzeichnet, daß das Mantelteil (12) ein Mantelteil mit im wesentlichen zylindrischer Form ist, dessen erstes axiales Ende (20) mit der Masse (16) aus dem elastomeren Material verbunden ist und dessen zweites axiales Ende (22) einen Verschlußdeckel (68) aufnimmt, in dem das Lager (70) der Welle (66) zum Mitdrehen der Kurbelstange (62) angeordnet ist.

10. Hydroelastische Halterung nach Anspruch 9, dadurch gekennzeichnet, daß das zweite axiale Ende (22) des zylindrischen Mantelteils (12) einen Flansch zum Befestigen der hydroelastischen Halterung (10) an der besagten Anordnung aufweist und daß der Deckel (68) einen radialen Flansch (74) aufweist, der dem Flansch (22) des Mantelteils (12) gegenüber vorgesehen ist und gegen diesen axial vorgespannt ist.

11. Hydroelastische Halterung nach einem der vorhergehenden Ansprüche, dadurch gekennzeichnet, daß die Ausdehnungskammer (33) im wesentlichen eine Ringform hat und einen inneren Sitz begrenzt, in dem der Stößel (44) angeordnet ist.

12. Hydroelastische Halterung nach einem der vorhergehenden Ansprüche, dadurch gekennzeichnet, daß die bewegliche Zwischenwand (30) im wesentlichen die Form einer Scheibe hat, die an ihrem äußeren Umfangsrand mit dem Mantelteil verbunden ist.

13. Hydroelastische Halterung nach Anspruch 12, dadurch gekennzeichnet, daß der Umfangsrand (36) der beweglichen Zwischenwand (30) dicht zwischen den gegenüberliegenden kreisförmigen Innenrändern von zwei starren ringförmigen Platten (28, 32) angebracht ist.

14. Hydroelastische Halterung nach Anspruch 13, dadurch gekennzeichnet, daß die ringförmige Platte (28), die axial auf der Seite der Masse (16) aus einem elastomeren Material angeordnet ist, einen Teil (92) aufweist, der im Schnitt ein rotationssymmetrisches Profil hat und der von seinem inneren ringförmigen Rand in das Innere der Arbeitskammer (26) verläuft und wenigstens eine kalibrierte Öffnung (94) für den Durchgang der Flüssigkeit aufweist.

15. Hydroelaetische Halterung nach Anspruch 14, dadurch gekennzeichnet, daß der rotationssymmetrische Teil (92) eine zentrale kalibrierte Öffnung (94) aufweist.

## Claims

1. Hydroelastic support (10) to be interposed between two assemblies to be suspended relative to one another, particularly for the suspension of an engine in a car, of the type having two members (12, 14) respectively connected to the two assemblies, said two members being joined by an elastomeric material mass (16), the support having at least one working chamber (26) at least partly defined by the elastomeric material mass (16), and an expansion chamber (33), said two chambers being at least partly filled with liquid and interconnected by a communicating passage (34) and of the type in which the working chamber (26) is also partly defined by an elastic material, mobile bulkhead (30), whose outer face (42) has an tappet (44) with which cooperates a device for moving the mobile bulkhead (30) in order to apply to the latter control displacements so as to create in the working chamber (26) pressure forces synchronous with the harmonics of the vibrations of one of said two assemblies, characterized in that the drive device is of the connecting rod (50) and crank (62, 66) type, in which the little end (54) of the connecting rod (50) is connected to the tappet (44) and in which the shaft (66) for rotating the crank (62) is mounted so as to rotate in a bearing (70) fixed to one (12) of the two members.

2. Hydroelastic support according to claim 1, characterized in that the crank has an offcentred handle (62) mounted in rotary manner in the big end (52, 56) of the connecting rod (50).

3. Hydroelastic support according to claim 2, characterized in that the offcentred handle (62) is mounted in rotary manner in a bearing (64) clamped to the big end (52, 56) of the connecting rod (50).

4. Hydroelastic support according to any one of the claims 1 to 3, characterized in that the tappet (44) is fixed to the free end of the little end (54) of the connecting rod (50).

5. Hydroelastic support according to any one of the claims 1 to 3, characterized in that the tappet (44) is materially integral with the little end of the connecting rod (50).

6. Hydroelastic support according to any one of the claims 1 to 5, characterized in that the big end of the connecting rod (50) is in two parts (52, 56).

7. Hydroelastic support according to any one of the claims 1 to 5, characterized in that the connecting rod (50) is moulded in one piece.

8. Hydroelastic support according to any one of the preceding claims, characterized in that one end (86) of the shaft (66) for rotating the crank (62) has locating means (88, 90) permitting the determination of its angular position with a view to the connection of the drive shaft.

9. Hydroelastic support according to any one of the preceding claims, characterized in that the member (12) is generally cylindrical and a first axial end (20) thereof is connected to the elastomeric material mass (16) and the second axial end (22) thereof receives a sealing cover (68), in which is located the bearing (70) of the shaft (66) for rotating the crank (62).

10. Hydroelastic support according to claim 9, characterized in that the second axial end (22) of the cylindrical member (20) has a flange for fixing the hydroelastic support (10) to the assembly and in that the cover (68) has a radial flange (74) facing the flange (22) of the member (12) against which it is axially clamped.

11. Hydroelastic support according to any one of the preceding claims, characterized in that the expansion chamber (33) is of a generally annular shape and defines an inner recess in which is located the tappet (44).

12. Hydroelastic support according to any one of the preceding claims, characterized in that the mobile bulkhead (30) is essentially shaped like a disk and is connected to the member by its outer, peripheral edge.

13. Hydroelastic support according to claim 12, characterized in that the peripheral edge (36) of the mobile bulkhead (30) is tightly clamped between the facing, inner, circular edges of two annular rigid plates (28, 32).

14. Hydroelastic support according to claim 13, characterized in that the annular plate (28) arranged axially on the side of the elastomeric material mass (16) has a part (92) having in cross-section a revolution profile and which extends from its inner, circular edge to the interior of the working chamber (26) and which has at least one metering, liquid passage hole (94).

15. Hydroelastic support according to claim 14, characterized in that said revolution part (92) has a central, metering hole (94).
